# EUROPEAN PATENT SPECIFICATION

(11) **EP 4 065 609 B1**
(45) Date of publication and mention of the grant of the patent: **29.04.2026**
(21) Application number: 20800944.9
(22) Date of filing: 09.11.2020
(51) Int. Cl.: C08F 2/01, B01J 8/00, B01J 8/14, C08F 10/00

(54) **PROCESS AND SYSTEM FOR COLLECTING CATALYST OR POLYMER SAMPLES FROM AN OPERATION UNIT OF A POLYMERIZATION PLANT**
VERFAHREN UND SYSTEM ZUM SAMMELN VON KATALYSATOR- ODER POLYMERPROBEN AUS EINER BETRIEBSEINHEIT EINER POLYMERISATIONSANLAGE
PROCÉDÉ ET SYSTÈME DE COLLECTE D'ÉCHANTILLONS DE CATALYSEUR OU DE POLYMÈRE DANS UNE UNITÉ D'EXPLOITATION D'UNE USINE DE POLYMÉRISATION

(30) Priority: 25.11.2019 EP 19211229
(43) Date of publication of application: 05.10.2022
(73) Proprietor: Basell Poliolefine Italia S.r.l., 20121 Milano (IT)
(72) Inventor: CAPISANI, Paolo, 44122 Ferrara (IT); ARICH DE FINETTI, Nicolò, 44122 Ferrara (IT); BAITA, Pietro, 44122 Ferrara (IT)
(74) Representative: LyondellBasell
(86) International application number: PCT/EP2020/081425
(87) International publication number: WO 2021/104837

(56) References cited:
- EP-A1- 1 099 473
- EP-A1- 2 336 200
- WO-A1-2019/141521
- WO-A1-96/35936

## Description

### FIELD OF THE INVENTION

The present disclosure relates to a process and a system for collecting samples of a polymerization catalyst or of a catalyst-containing polymer from an operation unit of a polymerization plant. In particular, the present invention concerns a process and a system for collecting said samples from an in-line operation unit of an olefin polymerization plant.

### BACKGROUND OF THE INVENTION

Generally, the continuous processes of olefins polymerization are carried out by means of a gas-phase polymerization or a slurry polymerization. Both of them are usually carried out in the presence of a polymerization catalyst system. These processes may comprise a prepolymerization step, wherein the polymerization catalyst system is subjected to a prepolymerization in order to prevent reactor overheating, since the catalyst activity is less intense on prepolymerized particles. Successively, the obtained prepolymer is fed to a polymerization reactor.

Before the prepolymerization step, or before the polymerization step, in case prepolymerization is not provided, catalyst and cocatalyst may be precontacted in a precontacting vessel in order to activate the catalyst system.

Generally, the prepolymerization step is carried out in a liquid medium in a prepolymerization unit such as a loop reactor or a continuous stirred tank reactor (CSTR).

In order to evaluate the prepolymer features, it is necessary to extract and collect a specific amount of slurry from the prepolymerization unit. In particular, this sample evaluation aims to ascertain the degree of prepolymerization, as well as the yield and the quality of the prepolymer.

Currently, the step of collecting the prepolymerized catalyst sample is carried out through a centrifugal separator (cyclone) of the axial, spiral, helical or tangential type.

However, this known system presents some drawbacks. As a matter of facts, after the extracted slurry is conveyed into the centrifugal separator, a gas discharge valve, located at the upper portion of the centrifugal separator, is opened in order to off-gas. Since the particles involved in this kind of processes are fine particles, i.e. particles with a diameter smaller than 100 micron, when the gas discharge valve is opened, most of the finest particles are expelled together with gases. Therefore, the amount of slurry collected at the lower portion of the centrifugal separator is very scarce. Furthermore, the collected slurry results to be damaged because of the centrifugal force applied and the high differential pressure. Moreover, as soon as the slurry is expelled from the separator, the slurry contacts the atmosphere, exposing to pollution. This may lead to unreliable results in the sample evaluation. Finally, the collected slurry contains also catalyst residues, which are toxic for the operators. This may cause issues of unsafety work conditions.

Similar problems apply to a precontacting vessel and to a polymerization reactor, when a sample of the product contained therein must be collected. In particular, activated catalyst quality can be jeopardized by the contact with air moisture, while polymer characterized by small particle size can deliver the same problem as the prepolymer. The document WO-A-2019/141521 discloses an apparatus and method to withdraw samples from a unit of a polymerization plant composed of a system of valves, transfer conduits, collection tank and purge system with inert gas, discharge port at the bottom of the collection tank. The collected sample needs to be treated and handled further for analysis, which generates possible material losses and safety problems for the operator.

### SUMMARY OF THE INVENTION

Accordingly, at the current state of the art, there are no processes nor systems free from the above drawbacks. Therefore, it is now felt the need of having available a process and a system which overcome the above problems.

Hence, the present disclosure is aimed at providing a process and a system for collecting samples of a polymerization catalyst -in particular samples of a prepolymerized polymerization catalyst from a prepolymerization unit or samples of a polymerization catalyst from a precontacting vessel- or samples of the polymer which comprises the polymerization catalyst from the polymerization reactor, which allows overcoming the above-mentioned shortcomings.

In particular, a first object of the present invention is to provide a process for collecting samples of a polymerization catalyst or a catalyst-containing polymer from an operation unit of a polymerization plant which achieves collecting a proper amount of a good quality sample.

A second object of the present invention is to provide a process for collecting samples of a polymerization catalyst or a catalyst-containing polymer which is not hazardous for the operators.

These two objects are achieved by means of a process for collecting samples of a polymerization catalyst or of a catalyst-containing polymer from an operation unit of a polymerization plant, the operation unit comprising an upper end and a lower end, wherein the process comprises:
a) extracting a prefixed amount of product from the lower end of the operation unit through a discharge valve;
b) directing said product towards a filtering unit through an inlet valve;
c) flushing an inert gas through the filtering unit;
d) outgassing the filtering unit, through an outlet valve;
e) displacing the filtering unit in order to collect the sample.

### DETAILED DESCRIPTION OF THE INVENTION

A process with a combination of such steps achieves collecting a proper amount of a good quality sample. As a matter of facts, by avoiding applying centrifugal forces to the product, it is possible to avoid stressing it and, therefore, the product results undamaged. Moreover, since the gases are purged through a filter, particles are not lost, as in the prior art, and consequently a proper amount of sample is obtained. Furthermore, step e) of displacing the filtering unit allows opening it and extracting the sample in safe condition, for example under an extractor or a fume hood, thus avoiding issues of unsafe work conditions. Moreover, displacing the filter and extracting the sample in a proper site avoids contaminating the sample, with consequent reliable results. In addition to that, the sample is not spitted out, as in the centrifugal separator, but it may be gently removed from the filter, with further advantage from the sample quality point of view.

Preferably, after step a) of extracting a prefixed amount of product, the following step is carried out:
a1) collecting said product in an intermediate capacity pipe.
This avoids the filtering unit to be in direct contact with the operation unit and thus avoids the filtering unit from suffering pressure fluctuations which may damage it.

Advantageously, after step b) of directing said product towards a filtering unit, the following step is carried out:
b1) outgassing the filtering unit, through the outlet valve.
This step helps in drawing away the gas components and makes room for the inert gas.

Preferably, steps c) and d) are repeated at least three times, in order to remove the whole gas components from the sample.

A further object of the present invention is to provide a system for collecting samples of a polymerization catalyst or a catalyst-containing polymer from an operation unit which allows obtaining high quantity of undamaged and uncontaminated samples and, at the same time, which is safe for operators.

This object is achieved by means of a system as claimed in claim 5. In particular, said object is achieved through a system for collecting samples of a polymerization catalyst or of a catalyst-containing polymer from an operation unit of a polymerization plant, the operation unit comprising an upper end and a lower end, wherein the system comprises:
- a discharge valve, connectable to the operation unit, for extracting a predetermined amount of product from the lower end of the operation unit;
- an inlet valve for conveying said product to a filtering unit;
- a filtering unit for filtering said product, said filtering unit being displaceable;
- an inert gas inlet valve for flushing an inert gas through the filtering unit;
- an outlet valve for outgassing the filtering unit;
- connection piping.

The combination of the features of such a system, allows obtaining high quantity of undamaged and uncontaminated samples and, at the same time, it is safe for operators. As a matter of facts, the presence of a filtering unit avoids damaging the sample and losing fine particles thereof. Moreover, thanks to the movability of the filtering unit, it is possible to remove the sample gently and in safe conditions.

According with preferred embodiments of the invention, the filtering unit of the system comprises:
- a head flange comprising an inlet opening;
- a bottom body, suitable to be connected to the head flange, comprising a filter housing and an outlet opening;
- a mechanical filter located in said housing of the bottom body.

Preferably, the filter is a metal filter. More preferably, it is a steel net or a syntherized stainless steel filter.

The system for collecting samples of prepolymerized polymerization catalyst may further comprise:
- an intermediate capacity pipe, for containing a predetermined amount of product leaving the operation unit through the discharge valve, located upstream the filtering unit;
- an intermediate capacity inlet valve located upstream said intermediate capacity pipe;
- an intermediate capacity outlet valve located downstream said intermediate capacity pipe.

The intermediate capacity pipe and the relevant valves thereof allows collecting a predetermined amount of product avoiding the filtering unit to be in direct contact with the operation unit and thus avoiding the filtering unit from being damaged by pressure fluctuations.

When an intermediate capacity pipe is present, a further inert gas inlet valve for flushing inert gas therethrough may be provided. This allows the whole product to enter the filter unit.

Preferably, the system for collecting samples comprises at least one pressure sensor. This is preferably placed downstream the filtering unit, in order to ascertain the pressure in the filtering unit.

According to a preferred embodiment of the invention, the discharge valve is a piston valve and at least one between the inlet valve and the outlet valve is a spring-loaded valve.

The present invention refers also to an operation unit of a polymerization plant comprising a system for collecting samples of a polymerization catalyst or a catalyst-containing polymer as described above.

Preferably, the lower end of the operation unit comprises a rounded portion, jointed to two vertical portions, wherein a nozzle for connecting the discharge valve is positioned so as to form an angle α with the vertical portions. More preferably said angle α is substantially a 45° angle. This position allows collecting a higher amount of product.

Preferably, the operation unit is a prepolymerization unit, a precontacting vessel or a polymerization reactor.

In the present description and in the following claims, the term "catalyst" refers to a catalyst system comprising one or more different catalyst components with or without cocatalysts.

Moreover, in the present context, the term "operation unit" refers to a unit of the polymerization plant wherein an operation is carried out, as for example a precontacting vessel, a prepolymerization unit or a polymerization reactor.

Further features and advantages of the present invention will be clearer from the following description of preferred, but not exclusive, embodiments of a process and of a system for collecting samples of a polymerization catalyst or a catalyst-containing polymer from an operation unit, according to the present invention, shown by way of examples in the accompanying drawings, wherein:
- Figure 1 is a schematic view of the system for collecting samples of a polymerization catalyst or a catalyst-containing polymer from an operation unit according to a preferred embodiment of the invention, where a process of the invention is carried out;
- Figure 2 is a frontal schematic view of a loop prepolymerization unit (operation unit), showing possible system application sites according to preferred embodiments of the invention;
- Figure 3 is a frontal schematic view of an operation unit in the form of a vessel which may be used as a precontacting vessel, as a vessel prepolymerization unit, or as a polymerization vessel, showing possible system application sites according to preferred embodiments of the invention;
- Figure 4 is a longitudinal sectional view of a filtering unit of the system for collecting samples according to a preferred embodiment of the invention;
- Figure 5 is a top view of the bottom body, together with the filter, of the filtering unit of figure 4;
- Figure 6 is an exploded view of figure 4.

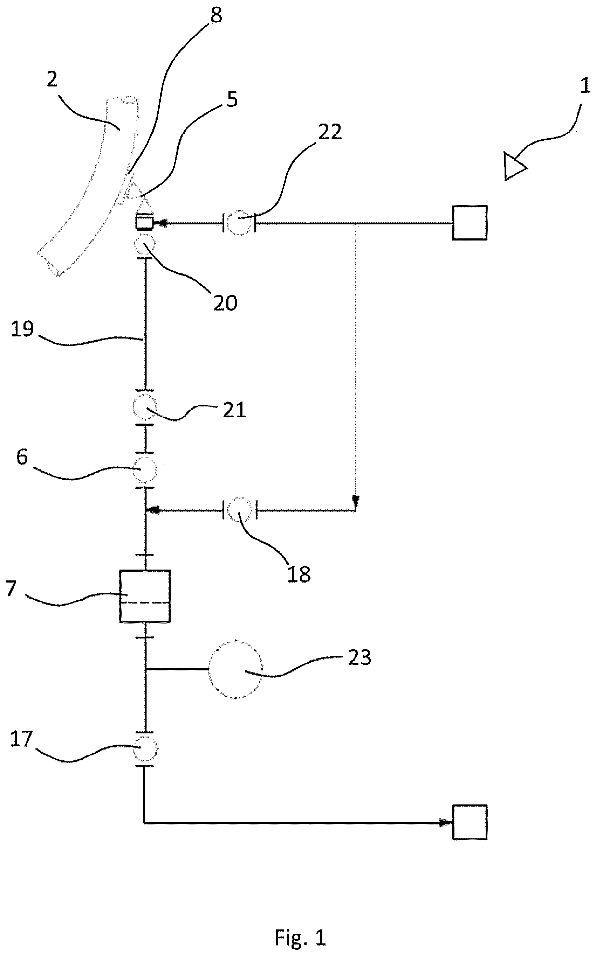

With reference to figures 1 - 6, a system for collecting samples of a polymerization catalyst or of a catalyst-containing polymer from an operation unit of a polymerization plant, is indicated by reference number 1. System 1 is applied to an operation unit 2 of a polymerization plant.

Preferably, the operation unit 2 is a prepolymerization unit of a gas-phase polymerization reactor. The gas-phase reactor is a fluidized bed reactor, a stirred bed reactor, a multizone circulating reactor or a different gas-phase reactor, of any known type used for gas-phase polymerization processes. Alternatively, the polymerization reactor may be a slurry reactor.

In this reactor, polymerization of olefins, mainly alpha-olefins, are carried out in the presence of a polymerization catalyst. This latter is subjected to a prepolymerization step before entering the polymerization reactor, as mentioned before.

The process herewith described is not restricted to the use of any particular family of polymerization catalysts. The invention is useful in any exothermic polymerization reaction employing any catalyst, whether it is supported or unsupported.

Highly active catalytic systems, such as Ziegler-Natta catalysts, single site catalysts, chromium-based catalysts, vanadium-based catalysts may be used.

A Ziegler-Natta catalyst system comprises the catalysts obtained by the reaction of a transition metal compound of groups 4 to 10 of the Periodic Table of Elements (new notation) with an organometallic compound of group 1, 2, or 13 of the Periodic Table of Elements. In particular, the transition metal compound can be selected among compounds of Ti, V, Zr, Cr, and Hf. Preferred compounds are those of formula Ti(OR)nXy-n in which n is comprised between 0 and y; y is the valence of titanium; X is halogen and R is a hydrocarbon group having 1-10 carbon atoms or a COR group. Among them, particularly preferred are titanium compounds having at least one Ti-halogen bond such as titanium tetrahalides or halogenalcoholates.

Preferred specific titanium compounds are TiCl₃, TiC₄, Ti(OBu)₄, Ti(OBu)Cl₃, Ti(OBu)₂Cl₂, Ti(OBu)₃Cl.

Preferred organometallic compounds are the organo-Al compounds and in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as A1Et₂Cl and AhEt₃Cl₃ optionally in mixture with said trialkyl aluminum compounds.

Particularly suitable high yield Ziegler-Natta catalysts are those wherein the titanium compound is supported on magnesium halide in active form, which is preferably MgCl₂ in active form.

Other useful catalysts are the vanadium-based catalysts, which comprise the reaction product of a vanadium compound with an aluminum compound, optionally in the presence of a halogenated organic compound. Optionally the vanadium compound can be supported on an inorganic carrier, such as silica, alumina, and magnesium chloride. Suitable vanadium compounds are VC1₄, VCl₃, VOCl₃, vanadium acetyl acetonate.

Other useful catalysts are those based on chromium compounds, such as chromium oxide on silica, also known as Phillips catalysts.

Still other useful catalysts are single site catalysts, for instance metallocene-based catalyst systems, which comprise:
- at least a transition metal compound containing at least one π bond;
- at least an alumoxane or a compound able to form an alkylmetallocene cation; and optionally an organo-aluminum compound.

A preferred class of metal compounds containing at least one π bond are metallocene compounds belonging to the following formula (I):

Cp(L)_{q}AMXₚ (I)

wherein
- Cp is a substituted or unsubstituted cyclopentadienyl group, optionally condensed to one or more substituted or unsubstituted, saturated, unsaturated or aromatic rings;
- A has the same meaning of Cp or it is a NR⁷, -0, S, moiety wherein R⁷ is a hydrocarbon radical containing from 1 to 40 carbon atoms;
- L is a divalent hydrocarbon moiety containing from 1 to 40 carbon atoms, optionally containing up to 5 silicon atoms, bridging Cp and A, preferably L is a divalent group (ZR⁷₂)ₙ; Z being C, Si, and the R⁷ groups, equal to or different from each other, being hydrogen or a hydrocarbon radical containing from 1 to 40 carbon atoms; more preferably L is selected from Si(CH₃)₂, SiPh₂, SiPhMe, SiMe(SiMe₃), CH₂, (CH₂)₂, (CH₂)₃ or C(CH₃)₂;
- M is a transition metal belonging to group 4, 5 or to the lanthanide or actinide groups of the Periodic Table of the Elements; preferably M is zirconium, titanium or hafnium;
- the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a hydrocarbon radical containing from 1 to 40 carbon atoms; preferably, the substituents X are selected from the group consisting of -Cl, -Br, -Me, - Et, -n-Bu, -sec-Bu, -Ph, -Bz, - CH₂SiMe₃, -OEt, -OPr, -OBu, -OBz and -NMe₂;
- p is an integer equal to the oxidation state of the metal M minus 2;
- q is 0 or 1, being 0 when the bridge L is not present.

Alumoxanes used as component b) are considered to be linear, branched or cyclic compounds containing at least one group of the type: 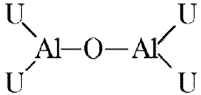 wherein the substituents U, same or different, are defined below. In particular, alumoxanes of the formula: 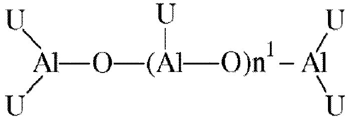 can be used in the case of linear compounds, wherein n 1 is 0 or an integer of from 1 to 40 and where the U substituents, same or different, are hydrogen atoms, halogen atoms, C₁-C₂₀-alkyl, C₃-C₂₀-cyclalkyl, C₆-C₂₀-aryl, C₇-C₂₀-alkylaryl or C₇C₂₀-arylalkyl radicals, optionally containing silicon or germanium atoms, with the proviso that at least one U is different from halogen, and j ranges from 0 to 1, being also a non-integer number; or alumoxanes of the formula: 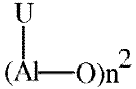 can be used in the case of cyclic compounds, wherein n² is an integer from 2 to 40 and the U substituents are defined as above.

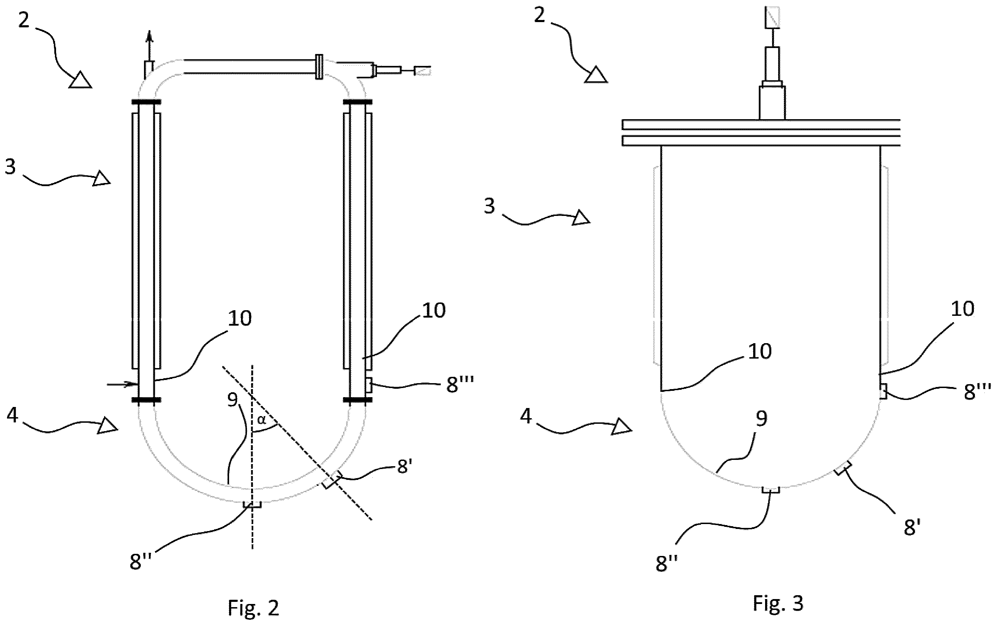

The prepolymerization is carried out in a liquid medium in any type of prepolymerization unit. For example, the prepolymerization unit may be a loop prepolymerization unit, as the one illustrated in figure 2, as well as a vessel prepolymerization unit, as the one shown in figure 3. In the embodiment of figure 3, the prepolymerization unit is a continuous stirred tank reactor (CSTR).

Alternatively, the operation unit 2 may be a precontacting vessel, with the same configuration shown in figure 3, wherein the different compounds of the catalyst system are precontacted in order to activate the same catalyst system.

In a different embodiment, the operation unit 2 may comprise a polymerization reactor, but more generally it can be any polymerization vessel. Examples of polymerization vessel other than reactors or precontacting vessels are tanks, or equipment such as steamers, dryers and devolatilization vessels, that contain solid polymer particles which are being formed, or are already formed as a result of a polymerization reaction, both in a static form or in a dynamic form. As to reactors, they include reactors for gas-phase polymerization and reactors for slurry polymerization, without being limited to these.

In any of the previous cases, said operation unit 2 comprises an upper end 3 and a lower end 4.

From here on, reference is particularly made to the embodiment shown in figure 2, wherein the operation unit 2 is a loop prepolymerization unit, for the sake of clarity. However, the following is analogously applicable to the further embodiments.

The liquid medium entering the prepolymerization unit, as indicated by the lower arrow in figure 2, comprises an alpha-olefin monomer, optionally with the addition of an inert hydrocarbon solvent. This last may be either aromatic, such as toluene, or aliphatic, such as propane, hexane, heptane, isobutene, cyclohexane or 2,2,4-trimethylpentane. However, the prepolymerization can be carried out in the absence of inert hydrocarbon solvents as well as in the absence of any molecular weight regulator, such as hydrogen. Alternatively, a limited amount of hydrogen may be fed to the prepolymerization unit.

The average residence time in the prepolymerization unit, is the ratio between the volume of the prepolymerization unit itself and the volumetric rate of the polymeric slurry discharged from said unit, generally from its upper end 3, as shown by the higher arrow in figure 2. This parameter, generally, ranges from 2 to 40 minutes.

The operating prepolymerization temperature generally ranges from 0°C to 70°C.

The polymerization degree of the prepolymerized catalyst ranges from 1 to 800 g per gram of solid catalyst component.

A polymeric slurry containing the prepolymerized catalyst is discharged from the prepolymerization unit before being continuously fed to the polymerization reactor.

With reference to figure 1, system 1, according to the present invention, comprises a discharge valve 5, connectable to the prepolymerization unit for extracting a predetermined amount of product from the lower end 4 of the same prepolymerization unit. Said discharge valve 5 is preferably a piston valve, also known as ram type valve.

The lower end 4 of the prepolymerization unit comprises a rounded portion 9, jointed to two vertical portions 10, wherein a nozzle 8 for connecting the discharge valve 5 is positioned so as to form an angle α with the vertical portions. As shown in figures 2 and 3, nozzle 8 may be placed at different sites. As a matter of facts, although the figures shows three nozzle 8', 8" and 8‴, preferably a single nozzle 8 is provided at the lower end 4 of the prepolymerization unit in order to extract the sample. 8' 8" and 8‴ shows three possible locations of the nozzle 8 in the rounded portion 9. The most preferred position is illustrated by nozzle 8', that is to say, said angle α is of about 45°. At this position of the prepolymerization unit, there is a high amount of solid particles in the slurry and therefore, a higher amount of slurry may be collected. In a second preferred embodiment, said angle α is of about 0°C, as indicated by nozzle 8". Each position between nozzle 8" and 8‴ is a possible position for nozzle 8.

According to the present invention, system 1 comprises a filtering unit 7 for filtering the extracted slurry.

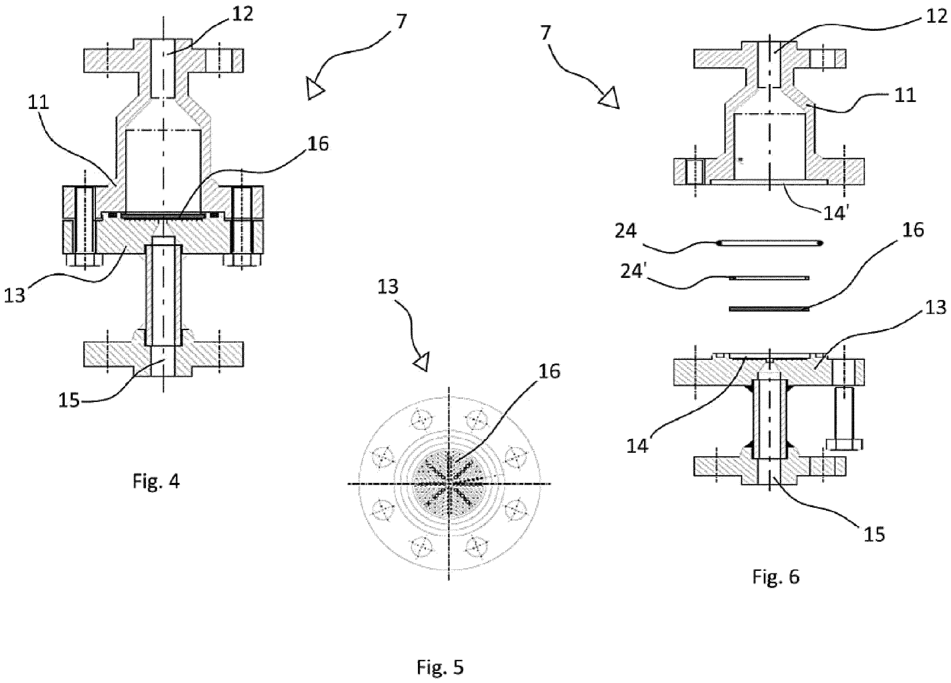

With reference to figures 4-6, the filtering unit 7 comprises a head flange 11, provided with an inlet opening 12 to let the product entering the same filtering unit 7, and a bottom body 13, suitable to be connected to the head flange 11 by means of mechanical connecting means. Said bottom body 13 comprises a filter housing 14 and an outlet opening 15 to let the gases leaving the filtering unit 7.

Also, the head flange 11 may be provided with a filter housing corresponding to filter housing 14.

The filtering unit 7 comprises a mechanical filter 16 located in said filter housing 14. Preferably, said filter 16 is a metallic filter such as a steel net filter or a syntherized stainless steel filter.

The filtering unit 7 comprises also one or more gaskets, such as one or more o-ring 24 and/or another type of gasket 24'. A gasket housing 14' may be provided in the head flange 11, as in the embodiment of figure 6, and/or in the bottom body 13.

According to the present invention, the filtering unit 7 is displaceable, i.e. it is possible to remove it from the system 1 and transfer it to a different location, where a more appropriate removal of the sample gathered on the filter 16 of the filtering unit 7 may be carried out. For this reason, system 1 is provided with dedicated mechanical connecting means, designed to removably connect the filtering unit 7 with the piping of the same system 1.

System 1 also comprise an inlet valve 6 for conveying the product to the filtering unit 7. Accordingly, said inlet valve 6 is located upstream the filtering unit 7. The inlet valve 6 is preferably a spring loaded valve.

Moreover, system 1 comprises an outlet valve 17 for outgassing the filter unit 7, in order to remove the gases from system 1. Also outlet valve 17 is a valve of the spring loaded type.

According to the present invention, an inert gas inlet valve 18 for flushing an inert gas through the filtering unit 7, is also provided. Preferably, nitrogen is used, however any inert gas may be used.

According to a preferred embodiment of the invention, the system 1 for collecting samples, further comprises an intermediate capacity pipe 19, for containing a predetermined amount of product leaving the prepolymerization unit through the discharge valve 5, which is located upstream the filtering unit 7, and the relevant valves thereof:
- an intermediate capacity inlet valve 20, located upstream said intermediate capacity pipe 19, to let the slurry enter the intermediate capacity pipe 19; and
- an intermediate capacity outlet valve 21, located downstream said intermediate capacity pipe 19, to let the slurry leaving the intermediate capacity pipe 19 and conveying the slurry to the filtering unit 7.

As mentioned before, the intermediate capacity tube 19 avoids the filtering unit 7 to be in direct contact with the prepolymerization unit, or other operation units, and, consequently, avoids damages due to pressure variations.

When an intermediate capacity tube 19, with its intermediate capacity outlet valve 21, is provided, as in the preferred embodiment of figure 1, it is possible to remove one between the intermediate capacity outlet valve 21 and the inlet valve 6. However, it is preferable to have the two valves located in series for safety reasons.

Moreover, in case an intermediate capacity tube 19 is provided, a further inert gas inlet valve 22 for flushing inert gas through the intermediate capacity pipe 19 is provided.

The system 1 comprises at least one pressure sensor 23 and proper connecting piping for connecting the different components of system 1.

With reference to the system 1 of figure 1, it will now be described a process for collecting samples of a polymerization catalyst or a catalyst-containing polymer from an operation unit 2, according to preferred embodiments the present invention.

According to step a), a prefixed amount of product is extracted from the lower end 4 of the operation unit 2 through a discharge valve 5. Then, said product is directed towards a filtering unit 7 through an inlet valve 6, according to step b. Later, an inert gas is flushed through the filtering unit 7 by opening valve 18 - step c) - and the filtering unit 7 is outgassed through the outlet valve 17 - step d). After that, the filtering unit 7 is removed in order to collect the sample - step e).

In particular, the process of the invention, will now be described with reference to the embodiment illustrated in figure 2, i.e. when the operation unit 2 is a loop prepolymerization reactor.

While a slurry comprising prepolymerized polymerization catalyst, unreacted catalyst and unreacted monomer is circulating in the loop prepolymerization unit, a prefixed amount of said slurry is extracted from the lower end 4 of the prepolymerization unit, through the discharge valve 5 located at nozzle 8, according to step a) of the invention.

Preferably, said slurry is collected in the intermediate capacity pipe 19 through intermediate capacity inlet valve 20, according to step a') of the invention.

Then said slurry is directed towards a filtering unit 7 through the inlet valve 6, according to step b). Hence, preferred step b1) of outgassing the filtering unit 7, through the outlet valve 17, is accomplished.

Afterwards, step c) of flushing, an inert gas through the filtering unit 7 is carried out, in order to remove the unreacted monomer. In other words, nitrogen or any other inert gas, is directed towards the filtering unit 7, and then this latter is outgassed through the outlet valve 17 (step d)). Steps c) and d) are preferably repeated three times in order to substantially remove the whole monomer.

Finally, step e) of displacing the filtering unit 7 is carried out. This step allows collecting the prepolymerized polymerization catalyst sample in a proper site, under appropriate conditions.

When the operation unit 2 is a precontacting vessel, a vessel polymerization unit or a polymerization reactor, the process is analogous, with the difference that the product extracted may be a powder/gas mixture, instead of a slurry, depending on the cases. Moreover, in the case of a precontacting vessel, the sample collected contains the polymerization catalyst, in the case of a prepolymerization unit, the sample contains a prepolymerized polymerization catalyst and in the case of a polymerization reactor, the sample contains polymer.

### EXAMPLES

Here follows a possible operating mode of system 1:
- System 1 is in stand by condition: discharge valve 5, intermediate capacity inlet valve 20, intermediate capacity outlet valve 21, inlet valve 6, outlet valve 17, inert gas inlet valve 18 and further inert gas inlet valve 22 are all closed.
- Intermediate capacity inlet valve 20 is opened.
- Discharge valve 5 is opened in order to collect product in the intermediate capacity pipe 19.
- Discharge valve 5 is closed.
- Intermediate capacity inlet valve 20 is closed.
- Inlet valve 6 is opened.
- Intermediate capacity outlet valve 21 is opened, in order to transfer the product to the filtering unit 7.
- Inlet valve 6 is closed.
- Intermediate capacity outlet valve 21 is closed.
- Outlet valve 17 is opened in order to depressurize from the bottom.
- Pressure in the filtering unit 7 is measured by means of the pressure sensor 23.
- When pressure is lower than 0,5 barg, or equal to discharge header pressure, outlet valve 17 is closed.
- Further inert gas inlet valve 22, intermediate capacity inlet valve 20, intermediate capacity outlet valve 21, inlet valve 6 are opened in order to pressurize the intermediate capacity pipe 19 and the filtering unit 7 with nitrogen.
- Pressure in the filtering unit 7 is measured by means of the pressure sensor 23.
- When pressure is higher than 3 barg, or equal to inert gas supply pressure, further inert gas inlet valve 22 is closed.
- Outlet valve 17 is opened in order to depressurize.
- Pressure in the filtering unit 7 is measured by means of the pressure sensor 23.
- When pressure is lower than 0.5 barg, or equal to discharge header pressure, outlet valve 17 is closed.
- The last four step are repeated at least three times, in order to remove the entire amount of monomer, in the case in which the operation unit 2 is a prepolymerization unit, in the other cases, flushing the inert gas is used to clean the product.
- Intermediate capacity inlet valve 20 and intermediate capacity outlet valve 21 are closed.
- Inlet valve 6 is closed.
- The filtering unit 7 is displaced from system 1 in order to remove the sample in a proper location, for example under a fume hood.
- The filtering unit 7 is emptied, cleaned and reinstalled in system 1.

It is clear from the above description that the process for collecting samples of a polymerization catalyst or a polymerization catalyst-containing polymer from an operation unit of a polymerization plant, as well as the relevant system, fully achieve the intended aims and solve the above-highlighted problems of the existing processes and system. As a matter of facts, thanks to the features of system 1 and to the steps of the process claimed in claim 1, it is possible to collect a high amount of undamaged and unpolluted sample in safe work conditions.

## Claims

1. A process for collecting samples of a polymerization catalyst or of a catalyst-containing polymer from an operation unit (2) of a polymerization plant, the operation unit (2) comprising an upper end (3) and a lower end (4), the process comprising:
a) extracting a prefixed amount of product from the lower end (4) of the operation unit (2) through a discharge valve (5);
b) directing said product towards a filtering unit (7) through an inlet valve (6);
c) flushing an inert gas through the filtering unit (7);
d) outgassing the filtering unit (7), through the outlet valve (17);
e) displacing the filtering unit (7) in order to collect the sample.

2. A process according to claim 1 wherein after step a) of extracting a prefixed amount of product, the following step is carried out:
a1) collecting said product in an intermediate capacity pipe (19).

3. A process according to claim 1 or 2 wherein after step b) of directing said product towards a filtering unit (7), the following step is carried out:
b1) outgassing the filtering unit (7), through the outlet valve (17).

4. A process according to one of previous claims, wherein steps c) and d) are repeated at least three times.

5. A system (1) for collecting samples of a polymerization catalyst or of a catalyst-containing polymer from an operation unit (2) of a polymerization plant, the operation unit (2) comprising an upper end (3) and a lower end (4), the system (1) comprising:
- a discharge valve (5), connectable to the operation unit (2), for extracting a predetermined amount of product from the lower end (4) of the operation unit (2);
- an inlet valve (6) for conveying said product to a filtering unit (7);
- a filtering unit (7) for filtering said product, said filtering unit (7) being displaceable;
- an inert gas inlet valve (18) for flushing an inert gas through the filtering unit (7);
- an outlet valve (17) for outgassing the filtering unit (7);
- connection piping.

6. A system (1) for collecting samples of a polymerization catalyst or a catalyst-containing polymer according to claim 5, wherein the filtering unit (7) comprises:
- a head flange (11) comprising an inlet opening (12);
- a bottom body (13), suitable to be connected to the head flange (11), comprising a filter housing (14) and an outlet opening (15);
- a mechanical filter (16) located in said housing (14) of the bottom body (13).

7. A system for collecting samples of a polymerization catalyst or a catalyst-containing polymer according claim 5 or 6, further comprising:
- an intermediate capacity pipe (19), for containing a predetermined amount of product leaving the operation unit (2) through the discharge valve (5), located upstream the filtering unit (7);
- an intermediate capacity inlet valve (20) located upstream said intermediate capacity pipe (19);
- an intermediate capacity outlet valve (21) located downstream said intermediate capacity pipe (19).

8. A system for collecting samples of a polymerization catalyst or a catalyst-containing polymer according to claim 7, comprising a further inert gas inlet valve (22) for flushing inert gas through the intermediate capacity pipe (19).

9. An operation unit (2) of a polymerization plant comprising a system (1) for collecting samples of a polymerization catalyst or polymer according to any of claims 5 - 8.

10. An operation unit according to claim 9 wherein the lower end (4) of the operation unit (2) comprises a rounded portion (9), jointed to two vertical portions (10), wherein a nozzle (8, 8', 8", 8‴) for connecting the discharge valve (5) is positioned so as to form an angle α with the vertical portions (10).

11. An operation unit according to claim 10 wherein said angle α is of about 45°.

12. An operation unit according to any of claims 9 - 11, wherein said operation unit (2) is a prepolymerization unit.

## Patentansprüche

1. Verfahren zum Sammeln von Proben eines Polymerisationskatalysators oder eines katalysatorhaltigen Polymers aus einer Betriebseinheit (2) einer Polymerisationsanlage, wobei die Betriebseinheit (2) ein oberes Ende (3) und ein unteres Ende (4) umfasst, wobei das Verfahren umfasst:
a) Extrahieren einer vorbestimmten Produktmenge aus dem unteren Ende (4) der Betriebseinheit (2) durch ein Auslassventil (5);
b) Leiten des Produkts durch ein Einlassventil (6) zu einer Filtereinheit (7);
c) Spülen der Filtereinheit (7) mit einem Inertgas;
d) Entgasen der Filtereinheit (7) durch das Auslassventil (17);
e) Verschieben der Filtereinheit (7), um die Probe zu sammeln.

2. Verfahren nach Anspruch 1, wobei nach Schritt a) des Extrahierens einer vorbestimmten Produktmenge der folgende Schritt durchgeführt wird:
a1) Sammeln des Produkts in einem Zwischenkapazitätsrohr (19)

3. Verfahren nach Anspruch 1 oder 2, bei dem nach Schritt b) des Leitens des Produkts zu einer Filtereinheit (7) der folgende Schritt durchgeführt wird:
b1) Entgasen der Filtereinheit (7) durch das Auslassventil (17).

4. Verfahren nach einem der vorhergehenden Ansprüche, wobei die Schritte c) und d) mindestens dreimal wiederholt werden.

5. System (1) zum Sammeln von Proben eines Polymerisationskatalysators oder eines katalysatorhaltigen Polymers aus einer Betriebseinheit (2) einer Polymerisationsanlage, wobei die Betriebseinheit (2) ein oberes Ende (3) und ein unteres Ende (4) umfasst, wobei das System (1) umfasst:
- ein Auslassventil (5), das mit der Betriebseinheit (2) verbunden werden kann, um eine vorbestimmte Produktmenge aus dem unteren Ende (4) der Betriebseinheit (2) zu entnehmen;
- ein Einlassventil (6) zum Befördern des Produkts zu einer Filtereinheit (7);
- eine Filtereinheit (7) zum Filtern des Produkts, wobei die Filtereinheit (7) verschiebbar ist;
- ein Inertgas-Einlassventil (18) zum Spülen eines Inertgases durch die Filtereinheit (7);
- ein Auslassventil (17) zum Entgasen der Filtereinheit (7);
- Verbindungsleitungen.

6. System (1) zum Sammeln von Proben eines Polymerisationskatalysators oder eines katalysatorhaltigen Polymers gemäß Anspruch 5, wobei die Filtereinheit (7) umfasst:
- einen Kopf-Flansch (11) mit einer Einlassöffnung (12);
- ein Unterteil (13), das zum Verbinden mit dem Kopf-Flansch (11) geeignet ist und ein Filtergehäuse (14) und eine Auslassöffnung (15) umfasst;
- ein mechanischer Filter (16), der sich in dem Gehäuse (14) des Unterteils (13) befindet.

7. System zum Sammeln von Proben eines Polymerisationskatalysators oder eines katalysatorhaltigen Polymers gemäß Anspruch 5 oder 6, das ferner umfasst:
- ein Zwischenkapazitätsrohr (19) zur Aufnahme einer vorbestimmten Menge des Produkts, das die Betriebseinheit (2) durch das Auslassventil (5) verlässt, stromaufwärts der Filtereinheit (7) angeordnet;
- ein Zwischenkapazitäts-Einlassventil (20), das stromaufwärts der Zwischenkapazitätsrohr (19) angeordnet ist;
- ein Zwischenkapazitäts-Auslassventil (21), das stromabwärts von der Zwischenkapazitätsrohr (19) angeordnet ist.

8. System zum Sammeln von Proben eines Polymerisationskatalysators oder eines katalysatorhaltigen Polymers gemäß Anspruch 7, umfassend ein weiteres Inertgas-Einlassventil (22) zum Spülen von Inertgas durch das Zwischenkapazitätsrohr (19).

9. Eine Betriebseinheit (2) einer Polymerisationsanlage, die ein System (1) zum Sammeln von Proben eines Polymerisationskatalysators oder Polymers gemäß einem der Ansprüche 5 bis 8 umfasst.

10. Eine Betriebseinheit gemäß Anspruch 9, wobei das untere Ende (4) der Betriebseinheit (2) einen abgerundeten Abschnitt (9) umfasst, der mit zwei vertikalen Abschnitten (10) verbunden ist, wobei eine Düse (8, 8', 8", 8"') zum Verbinden des Auslassventils (5) so positioniert ist, dass sie einen Winkel α mit den vertikalen Abschnitten (10) bildet.

11. Eine Betriebseinheit gemäß Anspruch 10, wobei der Winkel α etwa 45° beträgt.

12. Eine Betriebseinheit gemäß einem der Ansprüche 9 bis 11, wobei die Betriebseinheit (2) eine Vorpolymerisationseinheit ist.

## Revendications

1. Procédé pour prélever des échantillons d'un catalyseur de polymérisation ou d'un polymère contenant un catalyseur à partir d'une unité opérationnelle (2) d'une installation de polymérisation, l'unité opérationnelle (2) comprenant une extrémité supérieure (3) et une extrémité inférieure (4), le procédé comprenant :
a) extraire une quantité prédéterminée de produit de l'extrémité inférieure (4) de l'unité opérationnelle (2) à travers une vanne de décharge (5) ;
b) diriger ledit produit vers une unité de filtration (7) à travers une vanne d'entrée (6) ;
c) rincer un gaz inerte à travers l'unité de filtration (7) ;
d) dégazer l'unité de filtration (7) à travers la vanne de sortie (17) ;
e) déplacer l'unité de filtration (7) afin de collecter l'échantillon.

2. Procédé selon la revendication 1, dans lequel, après l'étape a) consistant à extraire une quantité prédéterminée de produit, l'étape suivante est effectuée :
a1) collecte dudit produit dans un tuyau de capacité intermédiaire (19).

3. Procédé selon la revendication 1 ou 2, dans lequel, après l'étape b) consistant à diriger ledit produit vers une unité de filtration (7), l'étape suivante est effectuée :
b1) dégazage de l'unité de filtration (7) par la vanne de sortie (17).

4. Procédé selon l'une des revendications précédentes, dans lequel les étapes c) et d) sont répétées au moins trois fois.

5. Système (1) pour collecter des échantillons d'un catalyseur de polymérisation ou d'un polymère contenant un catalyseur à partir d'une unité opérationnelle (2) d'une installation de polymérisation, l'unité opérationnelle (2) comprenant une extrémité supérieure (3) et une extrémité inférieure (4), le système (1) comprenant :
- une vanne de décharge (5), pouvant être raccordée à l'unité opérationnelle (2), pour extraire une quantité prédéterminée de produit de l'extrémité inférieure (4) de l'unité opérationnelle (2) ;
- une vanne d'entrée (6) pour acheminer ledit produit vers une unité de filtration (7) ;
- une unité de filtration (7) pour filtrer ledit produit, ladite unité de filtration (7) étant déplaçable ;
- une vanne d'entrée de gaz inerte (18) pour faire passer un gaz inerte à travers l'unité de filtration (7) ;
- une vanne de sortie (17) pour dégazer l'unité de filtration (7) ;
- une tuyauterie de raccordement.

6. Système (1) pour collecter des échantillons d'un catalyseur de polymérisation ou d'un polymère contenant un catalyseur selon la revendication 5, dans lequel l'unité de filtration (7) comprend :
- une bride de tête (11) comprenant une ouverture d'entrée (12) ;
- un corps inférieur (13), adapté pour être relié à la bride supérieure (11), comprenant un boîtier de filtre (14) et une ouverture de sortie (15) ;
- un filtre mécanique (16) situé dans ledit boîtier (14) du corps inférieur (13).

7. Système pour collecter des échantillons d'un catalyseur de polymérisation ou d'un polymère contenant un catalyseur selon la revendication 5 ou 6, comprenant en outre :
- un tuyau de capacité intermédiaire (19), destiné à contenir une quantité prédéterminée de produit sortant de l'unité opérationnelle (2) par la vanne de décharge (5), situé en amont de l'unité de filtration (7) ;
- une vanne d'admission à capacité intermédiaire (20) située en amont dudit tuyau à capacité intermédiaire (19) ;
- une vanne de sortie à capacité intermédiaire (21) située en aval dudit tuyau à capacité intermédiaire (19).

8. Système pour collecter des échantillons d'un catalyseur de polymérisation ou d'un polymère contenant un catalyseur selon la revendication 7, comprenant une autre vanne d'entrée de gaz inerte (22) pour faire passer du gaz inerte à travers le tuyau de capacité intermédiaire (19).

9. Unité d'exploitation (2) d'une usine de polymérisation comprenant un système (1) pour collecter des échantillons d'un catalyseur de polymérisation ou d'un polymère selon l'une quelconque des revendications 5 à 8.

10. Unité opérationnelle selon la revendication 9, dans laquelle l'extrémité inférieure (4) de l'unité opérationnelle
(2) comprend une partie arrondie (9), reliée à deux parties verticales (10), dans laquelle une buse (8, 8', 8", 8"') destinée à raccorder la vanne de décharge (5) est positionnée de manière à former un angle α avec les parties verticales (10).

11. Une unité opérationnelle selon la revendication 10, dans laquelle ledit angle α est d'environ 45°.

12. Unité opérationnelle selon l'une quelconque des revendications 9 à 11, dans laquelle ladite unité opérationnelle (2) est une unité de prépolymérisation.
